# EUROPÄISCHE PATENTSCHRIFT

(11) **EP 4 098 488 B1**
(45) Veröffentlichungstag und Bekanntmachung des Hinweises auf die Patenterteilung: **13.03.2024**
(21) Anmeldenummer: 22174522.7
(22) Anmeldetag: 20.05.2022
(51) Int. Cl.: B60R 7/04

(54) **ABLAGE FÜR EIN FAHRZEUG**
STORAGE LOCATION FOR A VEHICLE
TABLETTE POUR UN VÉHICULE

(30) Priorität: 01.06.2021 DE 102021114154
(43) Veröffentlichungstag der Anmeldung: 07.12.2022
(73) Patentinhaber: Lisa Dräxlmaier GmbH, 84137 Vilsbiburg (DE)
(72) Erfinder: Reischer, Franz, 84339 Unterdietfurt (DE); Zagler, Helmut, 84085 Langquaid (DE)

(56) Entgegenhaltungen:
- DE-A1-102007 015 189
- DE-A1-102011 088 377
- DE-B3-102009 033 415

## Beschreibung

### Technisches Gebiet

Die vorliegende Erfindung betrifft eine Ablage für ein Fahrzeug, wie zum Beispiel ein Kraftfahrzeug, ein Flugzeug oder ein Schienenfahrzeug, und insbesondere eine in eine Seitenverkleidung einer Fahrzeugtür im Fahrzeuginnenraum integrierte Ablage, beispielsweise eine Kartentasche.

### Stand der Technik

Es sind diverse Ausgestaltungen für Ablagen in Kraftfahrzeugen bekannt, bei welchen die Ablage zum Beispiel in eine Seitenverkleidungen einer Fahrzeugtür integriert ist. In der Regel müssen Ablagen in Fahrzeugen zwei zentralen Anforderungen entsprechen. Einerseits soll die Ablage ein möglichst großes Fassungsvermögen aufweisen, andererseits soll sie jedoch auch möglichst wenig Bauraum benötigen.

Um derartig gegensätzliche Anforderungen ausreichend zu erfüllen, ist es bekannt, Ablagen mit einem variablen Fassungsvermögen vorzusehen, so dass die Ablagen also in der Größe ihres Innenraums einstellbar sind und damit nur in besonders gefülltem Zustand eine große Menge an Bauraum einnehmen.

In der DE102011088377 wird eine derartige, einstellbare Ablage für ein Kraftfahrzeug beschrieben, welche ein bereichsweise elastisches, stabförmiges Element aufweist. Dieses bildet ein den Innenraum der Ablage begrenzendes Element. Dabei ist ein erstes Ende des stabförmigen Elements gelagert fixiert, wobei das zweite Ende des stabförmigen Elements in einem zweiten Lager verschiebbar ist. Das stabförmige Element kann dabei von einer Nichtgebrauchsstellung in zumindest eine Gebrauchsstellung übergeführt werden, wobei das stabförmige Element unter Verformung seine Kontur ändert und den Innenraum der Ablage erweitert.

Die DE202015101858, die DE102016102903 und die EP1861289B1 offenbaren jeweils eine verstellbare Ablage für ein Fahrzeug bzw. ein Kraftfahrzeug, mit einem elastischen Element, welches unter Verformung eine Einstellung bzw. Variation des Stauvolumens des jeweiligen Innenraums der Ablage ermöglicht.

Die DE 10 2007 015 189 A1 offenbart eine Ablage gemäß dem Oberbegriff des Anspruchs 1.

Die DE 10 2011 088 377 A1 offenbart eine Ablage für ein Kraftfahrzeug mit einem bereichsweise elastischen, stabförmigen Element, das in oder an der Trägerschicht eines Innenausstattungsteils eines Kraftfahrzeugs gelagert ist.

Diese verstellbaren Ablagen des Standes der Technik passen durch ihr jeweiliges elastisches Element das Fassungsvermögen des Innenraums der Ablage auf die in der Ablage verstauten Gegenstände an. Diese bekannten verstellbaren Ablagen sorgen zwar für eine zunächst zufriedenstellende Balance aus bereitgestelltem Fassungsvermögen und benötigtem Bauraum der jeweilige Ablage, jedoch sind insbesondere fragile oder gebrechliche Gegenstände in derartigen Ablagen der Rückstellkraft der elastischen Elemente ausgesetzt und können dadurch beschädigt werden.

Zudem weisen bekannte verstellbare Ablagen, welche mit einem elastischen Element zur Verstellung und zur Begrenzung des Innenraums ausgestaltet sind, durch die elastische Verformung des elastischen Elements bedingt, in ihrem Querschnitt immer eine zumindest abschnittsweise teilkreisförmige bzw. gerundete Kontur auf. Das Verstauen von im Wesentlichen rechteckigen Gegenständen ist damit besonders ineffizient in der Ausnutzung des hier zur Verfügung gestellten Stauvolumens.

Des Weitere ist bekannt, dass insbesondere elastische Elemente beim längerem Verweilen in einer definierten, unter Spannung stehenden Position bzw. Stellung der bekannten verstellbare Ablagen spröde werden, an Elastizität einbüßen und funktionsunfähig werden können.

### Beschreibung der Erfindung

Eine Aufgabe der Erfindung ist es daher, unter Einsatz konstruktiv möglichst einfacher Mittel eine einstellbare Ablage zur Verfügung zu stellen, welche eine zuverlässige und langlebige Nutzung mit einer optimale Stauraumausnutzung kombiniert.

Die Aufgabe wird durch den Gegenstand des unabhängigen Anspruchs 1 gelöst. Vorteilhafte Weiterbildungen der Erfindung sind in den abhängigen Ansprüchen, der Beschreibung und den begleitenden Figuren angegeben.

Eine erfindungsgemäße Ablage für ein Fahrzeug umfasst ein Wandelement und ein Halteelement. Das Wandelement umfasst einen ersten Abschnitt und einen zweiten Abschnitt. Der erste Abschnitt ist dabei zumindest teilweise in einer ersten Führungseinrichtung des Halteelements gelagert. Weiterhin ist der erste Abschnitt innerhalb der Führungseinrichtung mittels mindestens einem Rastelement definiert verrastbar. Durch eine Bewegung des ersten Abschnitts und/oder des zweiten Abschnitts ist eine definierte Öffnung oder Schließung der Ablage aufgrund der Verrastung des Rastelements gewährleistet. Das Wandelement dient insbesondere dazu, einen Innenraum der Ablage zumindest teilweise zu begrenzen. Auch das Halteelement kann den Innenraum der Ablage zumindest teilweise begrenzen. Der erste Abschnitt ist in der Führungseinrichtung gelagert und mittels dem mindestens einen Rastelement verrastbar. Das bedeutet, dass der erste Abschnitt sich zumindest teilweise in der Führungseinrichtung bewegt und in seiner Bewegung an wenigstens einer, bevorzugt an mehreren, mittels dem Rastelement definierten Positionen verrastbar ist. Der erste Abschnitt kann beispielsweise entlang einer von der ersten Führungseinrichtung definierten Ebene verschiebbar sein und mittels dem Rastelement an einer Öffnungs-Position und an einer Schließ-Position verrastet werden. Alternativ kann auch vorgesehen sein, dass das Rastelement lediglich zum Zweck der Führung des ersten Abschnitts in der ersten Führungseinrichtung vorgesehen ist. In diesem Fall umfasst die Ablage vorzugsweise eine separate Arretierungseinrichtung, die etwaige Positionen des ersten Abschnitts zum Halteelement arretiert.

Durch die Aufteilung des Wandelements in wenigstens einen ersten Abschnitt und einen zweiten Abschnitt können unterschiedliche Abschnitte des Wandelements einem unterschiedlichen Zweck dienen. So kann der erste Abschnitt primär dazu vorgesehen sein, im Halteelement in der Führungseinrichtung geführt zu werden, um die Position beziehungsweise Stellung des Wandelements relativ zum Halteelement zu variieren. Dem gegenüber kann der zweite Abschnitt primär dazu dienen, den Innenraum der Ablage zu begrenzen.

Die vom Wandelement umfassten Abschnitte sind in einer bevorzugten Ausführung der Erfindung mechanisch miteinander verbunden, so dass sich beispielsweise der erste Abschnitt bei einer Bewegung des zweiten Abschnitts mitbewegt und umgekehrt.

Eine oder alle mechanischen Verbindungen zwischen zwei Abschnitten können dabei kraft-, form- und/oder stoffschlüssig realisiert sein, sind vorzugsweise beweglich ausgeführt und können sowohl lösbar als auch unlösbar sein.

Bevorzugt sind diese mechanischen Verbindungen alle gleichartig ausgeführt, beispielsweise alle als stoffschlüssige Verbindungen ausgeführt, wobei natürlich nicht ausgeschlossen ist, dass auch unterschiedliche mechanische Verbindungen zwischen unterschiedlichen miteinander verbundenen Abschnitten des Wandelements realisiert sein können. Insbesondere kann vorgesehen sein, dass die Ablage eine symmetrische Ausbildung aufweist. Entsprechend kann die Ablage zusätzlich einen dritten Abschnitt umfassen. Der dritte Abschnitt ist dabei äquivalent dem ersten Abschnitt ausgestaltet. Das Halteelement weist somit auch eine zweite Führungseinrichtung auf, in welcher der dritte Abschnitt gelagert ist. Dazu kann das Halteelement als ein Bauteil ausgeführt sein, dass die erste Führungseinrichtung und die zweite Führungseinrichtung umfasst, oder alternativ können auch zwei Halteelemente vorgesehen sein, die jeweils eine Führungseinrichtung umfassen. Es kann vorgesehen sein, dass das Rastelement an der Führungseinrichtung angeordnet ist oder der Führungseinrichtung ausgebildet ist. Alternativ ist auch möglich, dass das Rastelement am ersten Abschnitt angeordnet oder von diesem ausgebildet ist.

Erfindungsgemäss ist vorgesehen, dass der zweite Abschnitt innerhalb des Halteelements dergestalt gelagert ist, dass der zweite Abschnitt anhebbar ist und damit eine definierte Verschiebung des verbundenen ersten Abschnitts relativ zu dem Rastelement innerhalb der Führungseinrichtung erlaubt.

Insbesondere kann der zweiten Abschnitt in der Lagerung im Halteelement in einer Blockierstellung oder einer Freigabestellung gelagert sein. Durch eine beispielsweise lineare Führung kann der zweit Abschnitt dabei zwischen diesen beiden Stellungen hin und her bewegt werden. Solange sich der zweiten Abschnitt in der Blockierstellung befindet, kann der mit ihm verbundene erste Abschnitt nicht relativ zum Rastelement bewegt werden. Wird der zweite Abschnitt nun von der Blockierstellung durch anheben entlang der Führung im Halteelement in die Freigabestellung gebracht, wird die Bewegung des ersten Abschnitts freigegeben.

Gemäß einer Ausführungsform der Erfindung ist zwischen dem ersten Abschnitt und dem zweiten Abschnitt zumindest ein weiterer Abschnitt angeordnet ist. Insbesondere kann vorgesehen sein, dass zwischen dem ersten Abschnitt und dem zweiten Abschnitt genau ein weiterer Abschnitt als Verbindungsabschnitt angeordnet ist. Dabei kann vorgesehen sein, dass die Abschnitte jeweils derart mechanisch miteinander verbunden sind, dass bei der Öffnung oder Schließung der Ablage eine bewegliche Verbindung zwischen den Abschnitten ausführbar ist. Entsprechend ist vorgesehen, dass der erste Abschnitt mit dem Verbindungsabschnitt mechanisch verbunden ist und der zweite Abschnitt ebenfalls mit dem Verbindungsabschnitt mechanisch verbunden ist, so dass der erste Abschnitt über den Verbindungsabschnitt mit dem zweiten Abschnitt mechanisch verbunden ist.

Dabei kann der erste Abschnitt eine Aussparung aufweisen, wobei das Rastelement innerhalb der Aussparung definiert bewegbar ist. Die Aussparung im ersten Abschnitt dient dabei dazu, mit ihrer Kontur eine Führungskulisse zu definieren, entlang welcher der erste Abschnitt relativ zum Rastelement verfahrbar ist. Dabei dient das Rastelement entsprechend als ein Führungselement, welches entlang der Kontur der durch die Aussparung definierten Führungskulisse verfährt und so die Bewegung des ersten Abschnitt gemäß der Führungskulisse sicherstellt.

In einer besonders einfachen Ausführungsform ist die Aussparung beispielsweise als ein lineares Langloch ausgestaltet. Das Rastelement kann dabei ein stiftförmiges Element sein. Der erste Abschnitt kann somit lediglich eine lineare Bewegung ausführen und ist dabei in seiner Bewegung durch Anschlag des stiftförmigen Rastelements an den jeweiligen Enden der Führungskulisse begrenzt. Der Anschlag der Rastelements an einem Ende der Führungskulisse würde in dieser Ausführungsform entsprechend eine Rastposition definieren, in welcher der erste Abschnitt vom Rastelement gehalten wird. Ein erstes Ende der Führungskulisse kann dabei eine erste Position definieren, in welcher die Ablage geöffnet ist und ein zweites Ende der Führungskulisse kann eine zweite Position definieren, in welcher die Ablage geschlossen ist.

In einer alternativen Ausgestaltung kann die Führungskulisse zumindest abschnittsweise im Wesentlichen teilkreisförmig ausgestaltet sein. Weitere Ausgestaltungsformen der Führungskulisse sind ebenfalls von der vorliegenden Erfindungsidee umfasst.

In der erfindungsgemäßen Ablage ist vorgesehen, dass der erste Abschnitt oder der zweite Abschnitt anhebbar ist und damit der erste Abschnitt relativ zum Rastelement innerhalb der Führungseinrichtung definiert verschiebbar ist. Das bedeutet, dass die Verschiebbarkeit des ersten Abschnitts relativ zum Rastelement anfangs blockiert ist und der erste Abschnitt erst dann relativ zum Rastelement innerhalb der Führungseinrichtung definiert verschiebbar ist, wenn eine derartige Bewegung freigegeben wird. Eine derartige Blockierung kann insbesondere mechanisch, z.B. durch ineinandergreifende oder sich verkeilende Geometrien, hergestellt werden. Das Anheben des ersten Abschnitts oder des zweiten Abschnitts dient dabei dazu, diese mechanische Blockade zu lösen. Die Ablage ist damit gegen ungewolltes Verstellen des Wandelements gesichert.

In einer weiteren Ausführungsform sind die Formen der Abschnitte dergestalt aufeinander abgestimmt, dass der zweite Abschnitt definiert bewegbar und damit die Ablage definiert öffenbar oder schließbar ist.

Im Sinne der vorliegenden Erfindung bedeutet eine Abstimmung der Formen der Abschnitte, dass die Formen der Abschnitte derart gewählt sind, dass sich eine Bewegung eines einzelnen Abschnitts derart auf die anderen Abschnitte überträgt, dass sich alle Abschnitte zum Zweck des Öffnens oder Schließens der Ablage miteinander koordiniert bewegen.

Unter den Formen sind bevorzugt zweidimensional beschreibbare Formen, wie z.B. Dreiecke oder Quadrate, gemeint, welche im Wesentlichen die Ausgestaltung der Abschnitte beschreiben können. Damit ist jedoch nicht ausgeschlossen, dass auch dreidimensionale Formen definiert werden können, um eine definierte Öffnung oder Schließung der Ablage zu gewährleisten.

In einer bevorzugten Ausführungsform, in dem zusätzlich zu dem ersten Abschnitt und dem zweiten Abschnitt ein weiterer Abschnitt vorgesehen ist, kann der zweite Abschnitt eine Trapezform aufweisen und der weiterer Abschnitt als ein Verbindungsabschnitt ausgestaltet sein und eine Dreiecksform aufweisen. Die eine der Seitenlängen der Trapezform des zweiten Abschnitts korrespondieren dabei mit einer der Seitenlängen der Dreiecksform des Verbindungsabschnitt, wobei die Spitze der Dreiecksform des Verbindungsabschnitts in Richtung der längsten Seite der Trapezform des zweiten Abschnitts zeigt. In dieser Ausführungsform ist der zweite Abschnitt mit seiner Basis mit dem Halteelement verbunden. Der zweite Abschnitt ist außerdem mit einem seiner Schenkel mit einer ersten Seite des Verbindungsabschnitts verbunden. Der erste Abschnitt ist mit einer zweiten Seite des Verbindungsabschnitts verbunden und teilweise in der ersten Führungseinrichtung des Halteelements gelagert.

Eine durch die erste Seite des Verbindungsabschnitts verlaufende erste Achse, eine durch die zweite Seite des Verbindungsabschnitts verlaufende zweite Achse und eine durch die Basis des zweiten Abschnitts verlaufende dritte Achse weisen dabei einen gemeinsamen Schnittpunkt auf.

Gemäß dieser Ausführungsform wird die erfindungsgemäße Ablage entsprechend geöffnet, indem der zweite Abschnitt um seine Basis in Bezug zum Halteelement verkippt, also um die dritte Achse verkippt. Eine derartige Bewegung des zweiten Abschnitts hat eine entsprechende Verkippung des Verbindungsabschnitts zum Halteelement zur Folge. Aufgrund seiner Dreiecksform, wird der Verbindungsabschnitt zudem um eine durch den gemeinsamen Schnittpunkt verlaufende Winkelhalbierende zwischen seiner ersten Seite und seiner zweiten Seite verdreht. Diese Verdrehung bewirkt, dass der Verbindungsabschnitt relativ zum zweiten Abschnitt verkippt und in dazu entgegengesetzter Richtung relativ zum ersten Abschnitt verkippt.

Es bildet sich im Querschnitt somit eine Art stufenförmige Anordnung der drei Abschnitte zueinander.

Der erste Abschnitt wird in diesem Szenario entsprechend bereichsweise aus der ihn lagernden ersten Führungseinrichtung herausgezogen, um der zweiten Seite des Verbindungsabschnitts zu folgen, welche sich aufgrund der Verkippung verlagert. Zusammengefasst kann man die Bewegungen der Abschnitte beim Vorgang des Öffnens wie folgt beschreiben: Der zweite Abschnitt kippt nach vorne, der Verbindungsabschnitt folgt dem zweiten Abschnitt und verdreht sich dabei und der erste Abschnitt folgt dem Verbindungsabschnitt und wird bereichsweise aus der Führungseinrichtung gezogen.

In einer symmetrischen Ausbildung der Ablage ist ein zweiter Verbindungsabschnitt umfasst. Der zweite Verbindungsabschnitt ist dabei äquivalent dem ersten Verbindungsabschnitt ausgestaltet und zwischen dem zweiten Abschnitt und dem dritten Abschnitt angeordnet. In weiteren möglichen Ausführungsformen können zumindest der zweite Abschnitt und der Verbindungsabschnitt natürlich auch andere Formen aufweisen.

Es kann zum Beispiel auch eine Ausführungsform denkbar sein, in der der zweite Abschnitt eine Dreiecksform aufweist und der Verbindungsabschnitt eine Trapezform aufweist. Weiterhin kann beispielsweise auch vorgesehen sein, dass der Verbindungsabschnitt eine balgartige Ausbildung aufweist. Der Verbindungsabschnitt hat somit einen verformbare Körper, was dem zweiten Abschnitt eine entsprechende Relativbewegung zwecks Öffnung oder Schließung der Ablage erlaubt.

Weiterhin sind auch Ausführungsformen denkbar, in denen Abschnitte des Wandelements nicht flächig, sondern lediglich im Wesentlichen punktuell miteinander verbunden sind. Ein Abschnitt kann entsprechend eine zumindest abschnittsweise teilkreisförmige Seite ausbilden, mit welcher er mit einem anderen Abschnitt verbunden ist. In einer derartigen Ausführungsform können Bereiche zwischen Abschnitten oder Bereiche, die an die Verbindung zweier Abschnitte angrenzen, durch ein verformbares Material, wie zum Beispiel einen Stoff, zumindest bereichsweise aufgefüllt bzw. abgedeckt werden, damit das Wandelement der Ablage entsprechend im Wesentlichen durchgehend geschlossen ist. Eine weitere alternative Ausführungsform kann umfassen, dass der zweite Abschnitt als ein Parallelogramm ausgestaltet ist. Äquivalent zu der Ausführungsform mit einem trapezförmigen zweiten Abschnitt und einem dreieckigen Verbindungsabschnitt, ist auch hier der Verbindungsabschnitt bevorzugt dreiecksförmig ausgestaltet. Entsprechend ist auch der Vorgang der Bewegungskette der Abschnitte beim Öffnen oder Schließen äquivalent zu der Ausführungsform mit einem trapezförmigen zweiten Abschnitt und einem dreieckigen Verbindungsabschnitt. Die Ausführungsform mit einem zweiten Abschnitt als ein Parallelogramm unterscheidet sich im Wesentlichen dadurch zu der Ausführungsform mit einem zweiten Abschnitt als Trapez, dass in der Ausführungsform mit dem zweiten Abschnitt als ein Parallelogramm keine Symmetrie der gesamten Ablage hergestellt werden kann.

In einer weiteren Ausführungsform der Erfindung ist zwischen zumindest dem ersten Abschnitt und dem zweiten Abschnitt oder dem ersten Abschnitt und dem weiteren Abschnitt ein elastisch verformbares Verbindungselements angeordnet ist, so dass eine scharnierartige Relativbewegung zwischen zumindest dem ersten Abschnitt und dem zweiten Abschnitt oder dem ersten Abschnitt und dem weiteren Abschnitt unter Verformung des Verbindungselements realisiert ist.

Unter einer scharnierartigen Relativbewegung ist dabei eine gelenkige Bewegung zwischen zumindest dem ersten Abschnitt und dem zweiten Abschnitt oder dem ersten Abschnitt und dem weiteren Abschnitt des Wandelements um eine Gelenkachse zu verstehen.

Gemäß einer ergänzenden Ausführungsform ist das elastisch verformbare Verbindungselement zwischen zumindest dem ersten Abschnitt und dem zweiten Abschnitt oder dem ersten Abschnitt und dem weiteren Abschnitt mittels einer Kaschierung zumindest des ersten Abschnitts und des zweiten Abschnitts oder des ersten Abschnitts und des weiteren Abschnitts erfolgt. Der Zwischenraum zwischen zumindest dem ersten Abschnitt und dem zweiten Abschnitt oder dem ersten Abschnitt und dem weiteren Abschnitt ist ausschließlich durch die Kaschierung ausgefüllt.

Die Kaschierung kann dabei insbesondere zumindest abschnittsweise aus einem Leder bestehen. Alternativ ist natürlich auch ein Kunstleder oder ähnliches denkbar. Insbesondere dient die Kaschierung dazu, sowohl die Funktion der mechanischen Verbindung zwischen zumindest dem ersten Abschnitt und dem zweiten Abschnitt oder dem ersten Abschnitt und dem weiteren Abschnitt auszubilden, als auch eine optisch und/oder haptisch ansprechende Oberfläche bereitzustellen.

Es kann vorgesehen sein, die Kaschierung über das gesamte Wandelement, also alle Abschnitte oder auch nur über eine bestimmten Bereich aufzutragen. Auch das Auftragen mehrerer unterschiedlicher Kaschierungen ist möglich. Die Kaschierung kann entweder an der Innenseite, also der dem Innenraum der Ablage zugewandten Seite, oder an der Außenseite, also der dem Innenraum der Ablage abgewandten Seite, angeordnet sein. In einer ergänzenden Ausführungsform kann natürlich auch vorgesehen sein, dass die Ablage mehrfach kaschiert wird, so dass beispielsweise auf beiden Seiten der Abschnitte eine Kaschierung aufgetragen ist und die Kaschierung die Abschnitte somit ummantelt. Insbesondere in einer Ausgestaltung, in der die Abschnitte beidseitig kaschiert sind, kann vorgesehen sein, dass die beiden gegenüberliegenden Kaschierungen im Zwischenraum zwischen zumindest dem ersten Abschnitt und dem zweiten Abschnitt oder dem ersten Abschnitt und dem weiteren Abschnitt miteinander verbunden sind.

Das der Zwischenraum zwischen zumindest dem ersten Abschnitt und dem zweiten Abschnitt oder dem ersten Abschnitt und dem weiteren Abschnitt ausschließlich durch die Kaschierung ausgefüllt ist, schließt natürlich nicht aus, dass nicht beispielsweise auch eine Klebeschicht in dem Zwischenraum vorgesehen ist.

In einer alternativen Ausführungsform ist das elastisch verformbare Verbindungselement zwischen zumindest dem ersten Abschnitt und dem zweiten Abschnitt oder dem ersten Abschnitt und dem weiteren Abschnitt mittels einer Ausdünnung von Material erfolgt.

Das bedeutet, dass das Wandelement miteinander verbundene Abschnitte als integrale Bestandteile ausbildet. Die Abgrenzung, welcher Bereich dieses einen Bauteils ein Abschnitt ist und welcher Bereich ein anderer Abschnitt ist, ist entsprechend durch die Ausdünnung im Material erkennbar. Zudem dient diese Ausdünnung dazu, als das elastisch verformbare Verbindungselement zu fungieren. Das Wandelement bildet somit sogenannte Filmscharniere zwischen zumindest dem ersten Abschnitt und dem zweiten Abschnitt oder dem ersten Abschnitt und dem weiteren Abschnitt aus.

Unter Ausdünnung kann dabei sowohl das Einbringen von weniger Material bei der Fertigung des Wandelements verstanden werden, als auch eine spätere Wegnahme von Material, wie z.B. durch die Eintragung von Kerben.

In einer Ausführungsform, alternativ zu einer Ausführungsform der Erfindung mit einem elastisch verformbaren Verbindungselement, ist zwischen zumindest dem ersten Abschnitt und dem zweiten Abschnitt oder dem ersten Abschnitt und dem weiteren Abschnitt ein Scharnier ausgebildet. Das Scharnier realisiert dabei eine scharnierartige Relativbewegung zwischen zumindest dem ersten Abschnitt und dem zweiten Abschnitt oder dem ersten Abschnitt und dem weiteren Abschnitt.

Bei einem Scharnier kann es sich hier um ein klassisches Türscharnier, ein Möbelscharnier, ein gerolltes Scharnier, ein Stangenscharnier, ein Topfscharnier oder auch ein Mehrgelenkscharnier handeln.

Weiterhin kann auch eine feste und eine weiche Komponente kombiniert werden, z.B. durch Spritzguss, um eine Art Filmscharnier zu realisieren.

In einer weiteren Ausführungsform der Erfindung, weist die Aussparung des ersten Abschnitts unterschiedliche Rastpositionen auf, so dass das Rastelement innerhalb der Aussparung auf verschiedenen Rastpositionen einstellbar ist und damit unterschiedliche Öffnungspositionen der Ablage erlaubt.

Das bedeutet, dass die von der Kontur der Aussparung definierte Führungskulisse, in welcher das Rastelement geführt wird, mehrere Enden aufweist oder zwischen zwei Enden wenigstens eine Zwischenposition aufweist. Ein Ende bzw. eine Zwischenposition würde dabei als eine Schließposition fungieren, wobei die anderen Enden und/oder Zwischenpositionen als mögliche Öffnungspositionen fungieren.

Beispielsweise kann die Führungskulisse im Wesentlichen T-förmig ausgestaltet sein, und somit drei Enden aufweisen, in denen das Rastelement verrastbar ist. Weiterhin kann die Führungskulisse beispielsweise im Wesentlichen V-förmig oder W-förmig ausgestaltet sein, und somit zwischen zwei Enden der Kontur eine oder mehrere Zwischenpositionen aufweisen, in denen das Rastelement verrastbar ist.

Eine Verrastung des Rastelement in einer definierten Position ist dabei nicht nur in einem Ende oder einer Zwischenposition einer Kontur denkbar. Es kann auch vorgesehen sein, dass an einer beliebigen Position der Führungskulisse eine Rastpositionen ausgestaltet ist. Dies kann z.B. durch eine Art Taschengeometrie in der Kontur realisiert sein, die an einer beliebigen Position der Führungskulisse ausgestaltet ist. Das Rastelement kann formschlüssig in die Tasche einfahren und damit an einer beliebigen Position entlang der Führungskulisse eine Verrastung realisieren. Beispielsweise kann die Führungskulisse dann auch im Wesentlichen O-förmig oder abschnittsweise kreisförmig ausgestaltet sein und unterschiedliche Öffnungspositionen der Ablage erlauben. Weitere Konturen der Führungskulisse sind im Sinne der vorliegenden Erfindung ebenfalls möglich.

In einer alternativen Ausführungsform ist natürlich auch möglich, dass die Führungseinrichtung die Aussparung aufweist.

### Figurenbeschreibung

Nachfolgend wird ein vorteilhaftes Ausführungsbeispiel der Erfindung unter Bezugnahme auf die begleitenden Figuren erläutert. Es zeigen:
- Figur 1: eine Vorderansicht der Ablage,
- Figur 2: einen Teilschnitt des Halteelements,
- Figur 3: eine perspektivische Ansicht der Ablage in einer eingefahrenen Stellung,
- Figur 4: eine perspektivische Ansicht der Ablage in einer ausgefahrenen Stellung,
- Figur 5: eine geschnittene Ansicht eines Wandelements einer erfindungsgemäßen Ablage in einer ersten Ausführungsform und
- Figur 6: eine geschnittene Ansicht eines Wandelements einer erfindungsgemäßen Ablage in einer zweiten Ausführungsform.

Die Figuren sind lediglich schematische Darstellungen und dienen nur der Erläuterung der Erfindung. Gleiche oder gleichwirkende Elemente sind durchgängig mit den gleichen Bezugszeichen versehen.

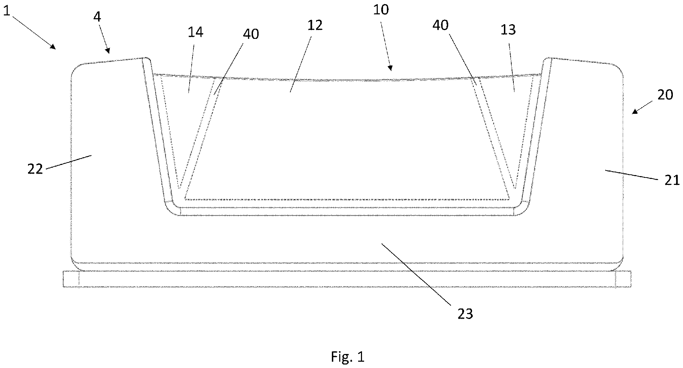

In Figur 1 ist eine Vorderansicht der erfindungsgemäßen Ablage 1 dargestellt. Die Ablage 1 umfasst ein Wandelement 10 und ein Halteelement 20. Das Halteelement 20 ist als ein gemeinsames Bauteil in einen ersten Bereich 21, einen zweiten Bereich 22 und einen dritten Bereich 23 unterteilt. Das Wandelement 10 besteht aus mehreren Abschnitten 12, 13, 14, welche jeweils über ein Verbindungselement 40 mechanisch miteinander verbunden sind. Das Verbindungselement 40 überdeckt dabei die Abschnitte 12, 13, 14, so dass deren Kontur hier zur besseren Erkennung als gestrichelte Linie dargestellt sind. Das Verbindungselement 40 ist als eine Lederschicht ausgebildet, welche alle Abschnitte 12, 13, 14 an wenigstens einer deren Seiten bedeckt und dort mit diesen mechanisch verbunden ist. Dabei kann das Verbindungselement 40 zum Beispiel auf die Abschnitte 12, 13,14 kaschiert sein.

Das Verbindungselement 40 erlaubt hier eine scharnierartige Relativbewegung zwischen zumindest dem ersten Abschnitt und dem weiteren Abschnitt (13, 14) des Wandelements 10 sowie zwischen dem zweiten Abschnitt 12 und dem weiteren Abschnitt (13, 14) des Wandelements 10.

Die erfindungsgemäße Ablage 1 sieht vor, dass an einem ersten Ende 3 der Ablage 1 ein erster Abschnitt (hier nicht zu sehen) des Wandelements 10 im ersten Bereich 21 des Halteelements 20 gelagert ist. Mittig an der Ablage 1 ist ein zweiter Abschnitt 12 des Wandelements 10 mit dem dritten Bereich 23 des Halteelements 20 verbunden. An einem zweiten Ende 4 der Ablage 1 ist ein dritter Abschnitt (nicht dargestellt) des Wandelements 10 im zweiten Bereich 22 des Halteelements 20 gelagert.

Zwischen dem ersten Abschnitt des Wandelements 10 und dem zweiten Abschnitt 12 des Wandelements 10 ist ein erster Verbindungsabschnitt 13 des Wandelements 10 angeordnet. Zwischen dem dritten Abschnitt des Wandelements 10 und dem zweiten Abschnitt 12 des Wandelements 10 ist ein zweiter Verbindungsabschnitt 14 des Wandelements 10 angeordnet. Dabei ist der erste Abschnitt mit dem ersten Verbindungsabschnitt 13 mechanisch verbunden ist. Der erste Verbindungsabschnitt 13 ist wiederum mit dem zweiten Abschnitt 12 mechanisch verbunden. Der zweite Abschnitt 12 ist an seiner dem ersten Verbindungsabschnitt 13 gegenüberliegenden Seite mit einem zweiten Verbindungsabschnitt 14 mechanisch verbunden. Der zweite Verbindungsabschnitt 14 ist außerdem mit dem dritten Abschnitt mechanisch verbunden.

Das bedeutet, dass die Ablage 1 durch die äquivalente Ausgestaltung seines ersten Endes 3 und seines zweiten Endes 4 symmetrisch aufgebaut ist.

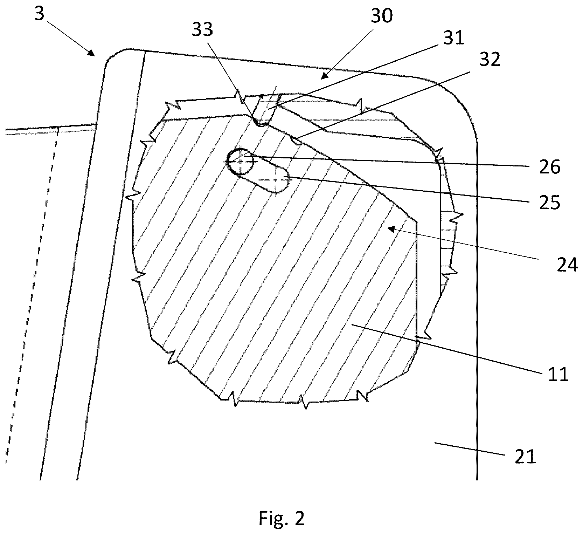

Figur 2 zeigt einen Teilschnitt des Halteelements 20, wobei die Figur 2 eine direkte Aufsicht auf das Halteelement 20 zeigt und die gezackte Linie einen Bereich des ersten Abschnitts 11 zeigt, der keine Deckschicht aufweist. Der Teilschnitt ist dabei im ersten Bereich 21 des Halteelements 20 verortet, so dass der erste Abschnitt 11 des Wandelements 10 teilweise zu sehen ist. Zudem ist die den ersten Abschnitt 11 lagernde erste Führungseinrichtung 24 sowie eine Arretierungseinrichtung 30 in der Figur 2 zu sehen.

Die Führungseinrichtung 24 umfasst ein stiftförmiges Rastelement 26, wobei der erste Abschnitt 11 eine Aussparung 25 ausbildet. Das Rastelement 26 ist dabei innerhalb der Aussparung 25 angeordnet und dort definiert bewegbar. Die Kontur der Aussparung 25 gibt eine Führungskulisse vor, entlang welcher das Rastelement 26 verfahren kann. Die Aussparung 26 ist hier als schlichtes Langloch ausgebildet, so dass die hier zu sehende Führungskulisse dem Rastelement 26 eine lineare Bewegung erlaubt.

Die weiterhin dargestellte Arretierungseinrichtung 30 dient zum halten bzw. arretieren des ersten Abschnitts 11 des Wandelements 10 in einer definierten Positionen. Die Arretierungseinrichtung 30 umfasst einen vom ersten Bereich 21 des Halteelements 20 als integralen Bestandteil ausgebildeten Stift 31 sowie eine erste und eine zweite Kerbe 32, 33.

Die Kerben 32, 33 sind dabei an der Außenseite des ersten Abschnitts 11 des Wandelements 10 ausgebildet.

Verfährt der erste Abschnitt 11 entlang der von der Aussparung 25 definierten Führungskulisse, werden auch die Kerben 32, 33 relativ zum Stift 31 bewegt. Verrastet der Stift 31 dabei in der ersten Kerbe 32, wird der erste Abschnitt 11 durch den Formschluss aus Stift 31 und erster Kerbe 32 in einer erste Position arretiert. Äquivalent kann der erste Abschnitt 12 auch in einer zweiten Position arretiert werden, wenn der Stift 31 in der zweiten Kerbe 32 verrastet.

Eine in Figur 2 gezeigte Führung und Arretierung des ersten Abschnitts 11 im ersten Bereich 21 des Halteelements 20 ist auch im zweiten Bereich 22 des Halteelements 20 vorgesehen, um den dort gelagerten dritten Abschnitt zu Führen und zu Arretieren.

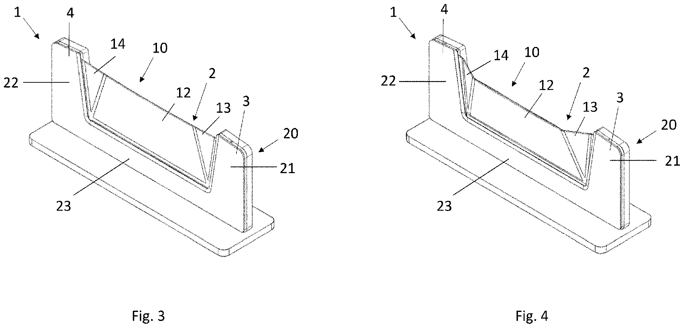

Die Figuren 3 und 4 zeigen eine Ablage 1 gemäß Figur 1 in unterschiedlichen Stellungen. Figur 3 zeigt eine perspektivische Ansicht der Ablage 1 in einer geschlossene Stellung, wobei Figur 4 eine perspektivische Ansicht der Ablage 1 in einer geöffneten Stellung zeigt. Dabei ist zu sehen, dass das Wandelement 10 der Ablage 1 in der geschlossenen Stellung im Wesentlichen plan ausgeführt ist. Die Abschnitte 11, 12, 13, 14 des Wandelements 10 sind entsprechend in einer gemeinsamen Ebene angeordnet und verlaufen im Wesentlichen parallel zu den sie führenden Bereichen 21, 22, 23 des Halteelements 20. In der geschlossene Stellung wäre ein Innenraum 2, den die Ablage 1 bei Integration in einem Fahrzeug zumindest teilweise begrenzt, besonders gering.

Dem gegenüber ist der Innenraum 2 der Ablage 1 bei der geöffneten Stellung deutlich größer. Dies wird dadurch erreicht, dass die Formen der Abschnitte 11, 12, 13, 14 dergestalt aufeinander abgestimmt sind, dass die Abschnitte 11, 12, 13, 14 definiert miteinander bewegbar sind und sie damit den Innenraum 2 der Ablage 1 definiert variieren.

Der zweite Abschnitt 12 weist hier eine Trapezform auf und die Verbindungsabschnitte 13, 14 weisen eine Dreiecksform auf. In dieser Ausführungsform ist der zweite Abschnitt 12 mit seiner Basis mit dem Halteelement 20 verbunden und zu diesem verkippbar. Mit einem seiner Schenkel ist der zweite Abschnitt 12 mit einer Seite des ersten Verbindungsabschnitts 13 verbunden. Mit dem anderen Schenkel ist der zweite Abschnitt 12 mit einer Seite des zweiten Verbindungsabschnitts 14 verbunden. Der erste Verbindungsabschnitt 13 ist mit einer anderen Seite mit dem ersten Abschnitt (hier nicht zu sehen) verbunden. Der zweite Verbindungsabschnitt 14 ist mit einer anderen Seite mit dem dritten Abschnitt (hier nicht zu sehen) verbunden.

Soll nun von der geschlossenen Stellung gemäß Figur 3 in die geöffnete Stellung gemäß Figur 4 übergegangen werden, wird der zweite Abschnitt 12 gegenüber dem Halteelement 20 um seine Basis nach vorne verkippt. Eine derartige Bewegung des zweiten Abschnitts 12 hat eine entsprechende Verkippung der beiden Verbindungsabschnitte 13, 14 zur Folge. Aufgrund ihrer Dreiecksform, werden die Verbindungsabschnitte 13, 14 zudem verdreht. Der erste Verbindungsabschnitt 13 dreht dabei um die Winkelhalbierende zwischen seiner mit dem zweiten Abschnitt 12 verbundenen Seite und seiner mit dem ersten Abschnitt verbundenen Seite. Der zweite Verbindungsabschnitt 14 dreht dabei um die Winkelhalbierende zwischen seiner mit dem zweiten Abschnitt 12 verbundenen Seite und seiner mit dem dritten Abschnitt verbundenen Seite. Aufgrund der symmetrischen Ausgestaltung der Ablage 1, drehen die Verbindungsabschnitte 13, 14 dabei in entgegengesetzte Richtungen. Das hat zur Folge, dass der erste Abschnitt und der dritte Abschnitt definiert aus ihrer Lagerung im Halteelement 20 aufeinander zu herausbewegt werden.

Zusammengefasst kann man die Bewegungen der Abschnitte 12, 13, 14 beim Vorgang des Öffnens wie folgt beschreiben: Der zweite Abschnitt 12 kippt nach vorne, die Verbindungsabschnitte 13, 14 folgen dem zweiten Abschnitt 12 und verdreht sich dabei und der erste Abschnitt wie auch der dritte Abschnitt folgen den Verbindungsabschnitten 13, 14 und werden bereichsweise aus ihrem jeweiligen Bereich 21, 22 des Halteelements 20 gezogen.

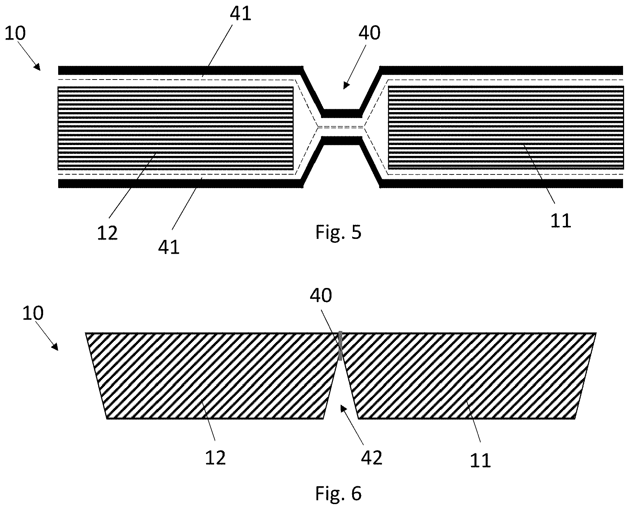

In Figur 5 ist eine geschnittene Ansicht eines Wandelements 10 einer erfindungsgemäßen Ablage in einer ersten Ausführungsform dargestellt.

Zu sehen sind ein erster Abschnitt 11 des Wandelements 10 und ein zweiter Abschnitt 12 des Wandelements 10 sowie ein Verbindungselement 40. Das Verbindungselement 40 besteht dabei aus zwei elastisch verformbaren Verbindungsschichten 41, welche die Abschnitte 11, 12 des Wandelements 10 zwischen sich einschließen. Beispielsweise können die Verbindungsschichten 41 zumindest abschnittsweise aus einem Leder bestehen. Die Abschnitte 11, 12 des Wandelements 10 sind dabei beabstandet zueinander angeordnet, wodurch ein Zwischenraum zwischen den beiden Abschnitten 11, 12 ausgebildet wird.

Die Verbindungsschichten 41 sind dabei mit den Abschnitten 11, 12, z.B. durch einen Kaschiervorgang, fest verbunden und im Zwischenraum zwischen den beiden Abschnitten 11, 12 miteinander fest verbunden. Derart wird eine mechanische Verbindung zwischen den Abschnitten 11, 12 über die Verbindungsschichten 41 realisiert. Durch die elastisch verformbaren Verbindungsschichten 41 ermöglicht die vom Verbindungselement 40 hergestellte mechanische Verbindung eine scharnierartige Relativbewegung zwischen dem ersten Abschnitt 11 und dem zweiten Abschnitt 12.

In dieser Ausgestaltung realisiert des Verbindungselement 40 somit sowohl die Funktion der mechanischen Verbindung, als auch eine optisch und/oder haptisch ansprechende Oberfläche am Wandelement 10, durch die beidseitig angeordneten Verbindungsschichten 41.

In Figur 6 ist eine geschnittene Ansicht eines Wandelements 10 einer erfindungsgemäßen Ablage in einer zweiten Ausführungsform gezeigt.

Entgegen der ersten Ausführungsform des Wandelements gemäß Figur 5, ist das Verbindungselement 40 hier ein integraler Bestandteil des Wandelements 10. Die mechanische Verbindung zwischen dem ersten Abschnitt 11 und dem zweiten Abschnitt 12 des Wandelements 10 durch das Verbindungselements 40 ist dabei derart realisiert, dass die Abschnitte 11, 12 des Wandelements 10 aus einem gemeinsamen Bauteil bestehen und das Verbindungselement 40 als eine Ausdünnung 42 im Material des Wandelements 10 zwischen den beiden Abschnitten 11, 12 ausgebildet ist.

Die erfindungsgemäße Ablage stellt unter Einsatz konstruktiv möglichst einfacher Mittel eine einstellbare Ablage zur Verfügung, welche eine zuverlässige und langlebige Nutzung gewährleistet und eine optimale Stauraumausnutzung bietet.

### BEZUGSZEICHENLISTE

- 1: Ablage
- 2: Innenraum
- 3: erstes Ende der Ablage
- 4: zweites Ende der Ablage

- 10: Wandelement
- 11: erster Abschnitt des Wandelements
- 12: zweiter Abschnitt des Wandelements
- 13: erster Verbindungsabschnitt des Wandelements
- 14: zweiter Verbindungsabschnitt des Wandelements

- 20: Halteelement
- 21: erster Bereich des Halteelements
- 22: zweiter Bereich des Halteelements
- 23: dritter Bereich des Halteelements
- 24: erste Führungseinrichtung
- 25: Aussparung
- 26: Rastelement

- 30: Arretierungseinrichtung
- 31: Stift
- 32: erste Kerbe
- 33: zweite Kerbe

- 40: Verbindungselement
- 41: Verbindungsschicht
- 42: Ausdünnung

## Patentansprüche

1. Ablage (1) für ein Fahrzeug, umfassend ein Wandelement (10) und ein Halteelement (20), wobei das Wandelement (10) einen ersten Abschnitt (11) und einen zweiten Abschnitt (12) umfasst und der erste Abschnitt (11) zumindest teilweise in einer ersten Führungseinrichtung (24) des Halteelements (20) gelagert ist, wobeider erste Abschnitt (11) innerhalb der Führungseinrichtung (24) mittels mindestens einem Rastelement (26) definiert verrastbar ist und durch eine Bewegung des ersten Abschnitts (11) und/oder des zweiten Abschnitts (12) eine definierte Öffnung oder Schließung der Ablage (1) aufgrund der Verrastung des Rastelements (26) gewährleistet, **dadurch gekennzeichnet, dass** der erste Abschnitt (11) oder der zweite Abschnitt (12) anhebbar ist und damit der erste Abschnitt (11) relativ zum Rastelement (26) innerhalb der Führungseinrichtung (24) definiert verschiebbar ist.

2. Ablage (1) nach Anspruch 1,
**dadurch gekennzeichnet, dass** zwischen dem ersten Abschnitt (11) und dem zweiten Abschnitt (12) zumindest ein weiterer Abschnitt (13, 14) angeordnet ist.

3. Ablage (1) nach einem der vorherigen Ansprüche,
**dadurch gekennzeichnet, dass** der erste Abschnitt (11) eine Aussparung (25) aufweist, wobei das Rastelement (26) innerhalb der Aussparung (25) definiert bewegbar ist.

4. Ablage (1) nach einem der vorherigen Ansprüche,
**dadurch gekennzeichnet, dass** die Formen der Abschnitte (11, 12, 13, 14) dergestalt aufeinander abgestimmt sind, dass der zweite Abschnitt (12) definiert bewegbar und damit die Ablage (1) definiert öffenbar oder schließbar ist.

5. Ablage (1) nach einem der vorherigen Ansprüche,
**dadurch gekennzeichnet, dass** zwischen zumindest dem ersten Abschnitt (11) und dem zweiten Abschnitt (12) oder dem ersten Abschnitt (11) und dem weiteren Abschnitt (13, 14) ein elastisch verformbares Verbindungselements (40) angeordnet ist, so dass eine scharnierartige Relativbewegung zwischen zumindest dem ersten Abschnitt (11) und dem zweiten Abschnitt (12) oder dem ersten Abschnitt (11) und dem weiteren Abschnitt (13, 14) unter Verformung des Verbindungselements (40) realisiert ist.

6. Ablage (1) nach Anspruch 5,
**dadurch gekennzeichnet, dass** das elastisch verformbare Verbindungselement (40) zwischen zumindest dem ersten Abschnitt (11) und dem zweiten Abschnitt (12) oder dem ersten Abschnitt (11) und dem weiteren Abschnitt (13, 14) mittels einer Kaschierung zumindest des ersten Abschnitts (11) und des zweiten Abschnitts (12) oder des ersten Abschnitts (11) und des weiteren Abschnitts (13, 14) erfolgt und der Zwischenraum zwischen zumindest dem ersten Abschnitt (11) und dem zweiten Abschnitt (12) oder dem ersten Abschnitt (11) und dem weiteren Abschnitt (13, 14) ausschließlich durch die Kaschierung ausgefüllt ist.

7. Ablage (1) nach Anspruch 5,
**dadurch gekennzeichnet, dass** das elastisch verformbare Verbindungselement (40) zwischen zumindest dem ersten Abschnitt (11) und dem zweiten Abschnitt (12) oder dem ersten Abschnitt (11) und dem weiteren Abschnitt (13, 14) mittels einer Ausdünnung (42) von Material erfolgt.

8. Ablage (1) nach einem der Ansprüche 1 bis 4,
**dadurch gekennzeichnet, dass** zwischen zumindest dem ersten Abschnitt (11) und dem zweiten Abschnitt (12) oder dem ersten Abschnitt (11) und dem weiteren Abschnitt (13, 14) ein Scharnier ausgebildet ist, so dass eine scharnierartige Relativbewegung zwischen zumindest dem ersten Abschnitt (11) und dem zweiten Abschnitt (12) oder dem ersten Abschnitt (11) und dem weiteren Abschnitt (13, 14) realisierbar ist.

9. Ablage (1) nach einem der Ansprüche 2 bis 8, **dadurch gekennzeichnet, dass** die Aussparung des ersten Abschnitts (11) unterschiedliche Rastpositionen aufweist, so dass das Rastelement (26) innerhalb der Aussparung (25) auf verschiedenen Rastpositionen einstellbar ist und damit unterschiedliche Öffnungspositionen der Ablage (1) erlaubt.

## Claims

1. Shelf (1) for a vehicle, comprising a wall element (10) and a retaining element (20), the wall element (10) comprising a first section (11) and a second section (12) and the first section (11) being mounted at least partially in a first guide device (24) of the retaining element (20), wherein the first section (11) can be locked in a defined manner within the guide device (24) by means of at least one latching element (26) and a movement of the first section (11) and/or the second section (12) ensures a defined opening or closing of the shelf (1) due to the locking of the latching element (26), **characterized in that** the first section (11) or the second section (12) can be raised and thus the first section (11) can be moved in a defined manner relative to the latching element (26) within the guide device (24).

2. Shelf (1) according to claim 1, **characterized in**
**that** at least one further section (13, 14) is arranged between the first section (11) and the second section (12).

3. Shelf (1) according to one of the preceding claims,
**characterized in that** the first section (11) has a recess (25), wherein the latching element (26) being movable in a defined manner within the recess (25).

4. Shelf (1) according to one of the preceding claims,
**characterized in that** the shapes of the sections (11, 12, 13, 14) are matched to one another in such a way that the second section (12) can be moved in a defined manner and thus the shelf (1) can be opened or closed in a defined manner.

5. Shelf (1) according to one of the preceding claims,
**characterized in that** an elastically formable connecting element (40) is arranged between at least the first section (11) and the second section (12) or the first section (11) and the further section (13, 14), so that a hinge-like relative movement is realized between at least the first section (11) and the second section (12) or the first section (11) and the further section (13, 14) with deformation of the connecting element (40).

6. Shelf (1) according to claim 5,
**characterized in that** the elastically formable connecting element (40) between at least the first section (11) and the second section (12) or the first section (11) and the further section (13, 14) by means of a lamination of at least the first section (11) and the second section (12) or the first section (11) and the further section (13, 14), and the intermediate space between at least the first section (11) and the second section (12) or the first section (11) and the further section (13, 14) is filled exclusively by the lamination .

7. Shelf (1) according to claim 5,
**characterized in that** the elastically formable connecting element (40) between at least the first section (11) and the second section (12) or the first section (11) and the further section (13, 14) is made by means of a thinning (42) of material.

8. Shelf (1) according to one of claims 1 to 4,
**characterized in that** a hinge is formed between at least the first section (11) and the second section (12) or the first section (11) and the further section (13, 14), so that a hinge-like relative movement between at least the first section (11) and the second section (12) or the first section (11) and the further section (13, 14) can be realized.

9. Shelf (1) according to one of claims 2 to 8, **characterized in that** the recess of the first section (11) has different latching positions, so that the latching element (26) can be set to different latching positions within the recess (25) and thus allows different opening positions of the shelf (1).

## Revendications

1. Tablette (1) pour un véhicule, comprenant un élément de paroi (10) et un élément de retenue (20), l'élément de paroi (10) comprenant une première section (11) et une deuxième section (12) et la première section (11) étant logée au moins partiellement dans un premier dispositif de guidage (24) de l'élément de retenue (20), la première section (11) pouvant être enclenchée de manière définie à l'intérieur du dispositif de guidage (24) au moyen d'au moins un élément d'enclenchement (26) et garantissant, par un mouvement de la première section (11) et/ou de la deuxième section (12), une ouverture ou une fermeture définie de la tablette (1) en raison de l'enclenchement de l'élément d'enclenchement (26), **caractérisé en ce que** la première section (11) ou la deuxième section (12) peut être soulevée et que la première section (11) peut ainsi être déplacée de manière définie par rapport à l'élément d'enclenchement (26) à l'intérieur du dispositif de guidage (24).

2. Tablette (1) selon la revendication 1, **caractérisé en**
**ce qu'**au moins une autre section (13, 14) est disposée entre la première section (11) et la deuxième section (12).

3. Tablette (1) selon l'une des revendications précédentes,
**caractérisé en ce que** la première section (11) présente un évidement (25), l'élément d'encliquetage (26) étant mobile de manière définie à l'intérieur de l'évidement (25).

4. Tablette (1) selon l'une des revendications précédentes, **caractérisée en ce que** les formes des sections (11, 12, 13, 14) sont adaptées les unes aux autres de telle sorte que la deuxième section (12) est mobile de manière définie et que la tablette (1) peut ainsi être ouverte ou fermée de manière définie.

5. Tablette (1) selon l'une des revendications précédentes,
**caractérisé en ce que** entre au moins la première section (11) et la deuxième section (12) ou la première section (11) et l'autre section (13, 14) est disposé un élément de liaison (40) élastiquement déformable, de sorte qu'un mouvement relatif de type charnière entre au moins la première section (11) et la deuxième section (12) ou la première section (11) et l'autre section (13, 14) est réalisé en déformant l'élément de liaison (40).

6. Tablette (1) selon la revendication 5,
**caractérisée en ce que** l'élément de liaison élastiquement déformable (40) entre au moins la première section (11) et la deuxième section (12) ou la première section (11) et l'autre section (13, 14) est réalisé au moyen d'un contrecollage d'au moins la première section (11) et la deuxième section (12) ou la première section (11) et l'autre section (13, 14) et l'espace intermédiaire entre au moins la première section (11) et la deuxième section (12) ou la première section (11) et l'autre section (13, 14) est rempli exclusivement par le contrecollage

7. Tablette (1) selon la revendication 5,
**caractérisé en ce que** l'élément de liaison (40) déformable élastiquement entre au moins la première section (11) et la deuxième section (12) ou la première section (11) et l'autre section (13, 14) est réalisé au moyen d'un amincissement (42) de matériau .

8. Tablette (1) selon l'une des revendications 1 à 4,
**caractérisé en ce qu'**une charnière est formée entre au moins la première section (11) et la deuxième section (12) ou la première section (11) et l'autre section (13, 14), de sorte qu'un mouvement relatif de type charnière est réalisable entre au moins la première section (11) et la deuxième section (12) ou la première section (11) et l'autre section (13, 14).

9. Tablette (1) selon l'une des revendications 2 à 8, **caractérisée en ce que** l'évidement de la première section (11) présente différentes positions d'encliquetage, de sorte que l'élément d'encliquetage (26) peut être réglé à l'intérieur de l'évidement (25) sur différentes positions d'encliquetage et permet ainsi différentes positions d'ouverture de la tablette (1).
